# DEMANDE DE BREVET EUROPEEN

(11) **EP 1 349 097 A1**
(43) Date de publication de la demande: **01.10.2003**
(21) Numéro de dépôt: 03290777.6
(22) Date de dépôt: 27.03.2003
(51) Int. Cl.: G06F 17/60

(54) **Procédé et système de notification d'événements concernant un moyen de transport**

(30) Priorité: 29.03.2002 FR 0204046
(71) Demandeur: FRANCE TELECOM, 75015 Paris (FR)
(72) Inventeur: Bonnefoy, Thierry, 38240 Meylan (FR); Froc, Erwan, 38700 La Tronche (FR)
(74) Mandataire: Loisel, Bertrand

(57) **Abrégé**

Le système comprend un serveur de profils (1) pour permettre à un voyageur d'activer au moins un profil contenant un ensemble de règles comprenant chacune une partie prémisses validée par au moins un événement concernant ledit moyen de transport et une partie conclusion déclenchant au moins une action consistant à émettre un message de notification à au moins une personne dite concernée, une base de données de profils (3) pour contenir tout profil activé au moyen du serveur de profils (1), un module de suivi d'événements (4) pour détecter les événements concernant ledit moyen de transport, un serveur de notifications (5) pour exécuter toute règle de profil actif de la base de données de profils (3) lorsque la partie prémisses d'une telle règle contient un événement détecté par le module de suivi d'événements (4), et au moins une passerelle de communication (6,7,8,9,10) pour transmettre à la personne concernée le message de notification de la partie conclusion de la règle exécutée par le serveur de notification (5).

## Description

Le domaine de l'invention est celui des procédés et systèmes pour informer des personnes concernées par un voyage utilisant des moyens de transport tel que l'avion, le train, le transport urbain ou le bateau. Les personnes concernées par un voyage ne sont pas nécessairement le ou les voyageurs eux-mêmes, ce sont par exemple les personnes qui viennent accueillir le voyageur à son arrivée, les personnes participant à une réunion pour laquelle le voyageur se déplace, les employés d'un hôtel où le voyageur a prévu de séjourner, le ou les clients du voyageur.

Dans le cas d'un déplacement en avion, certaines compagnies aériennes proposent à leur client de les informer en cas de vol annulé, d'un retard de plusieurs heures, etc. Cette information permet à la personne de réorganiser son emploi du temps et de ne se déplacer qu'au bon moment.

Cependant, il n'existe pas de moyens de prévenir automatiquement la ou les personnes à qui cette information serait particulièrement utile pour se déplacer à la gare ou à l'aéroport au bon moment, pour modifier l'ordre du jour d'une réunion ou pour la décaler, pour avertir le taxi ou l'hôtel qui ont été réservés, pour rassurer un membre de la famille.

La plupart des compagnies aériennes proposent sur leur site des informations concernant les vols en cours. De même, les compagnies ferroviaires diffusent dans les gares des informations concernant le retard des trains à l'arrivée. Ces informations existent mais ne sont pas exploitées à des fins de notification automatiques à un tiers.

Généralement, le seul moyen de prévenir les personnes d'un retard ou d'une avance par rapport à l'heure d'arrivée prévue consiste à laisser au voyageur le soin d'estimer ce retard ou cette avance et de contacter la ou les personnes concernées. En fonction du moyen de transport, en particulier dans le cas d'un avion, le voyageur ne peut pas utiliser son téléphone pour prévenir. De même, dans le train, il n'est pas toujours aisé d'établir une communication à cause d'un tunnel ou autre. Dans le cas d'un voyage à l'étranger, il n'est pas toujours facile de contacter une personne, il faut par exemple disposer d'une carte téléphonique appropriée, de disposer d'un téléphone mobile et d'un abonnement qui permette de téléphoner dans le pays visité.

L'invention a pour objectif de permettre à un voyageur d'indiquer avant ou pendant son voyage une liste de personnes à prévenir automatiquement en fonction de type d'événement qu'il précise à cette fin.

Un premier objet de l'invention est un système de notification d'événements concernant un moyen de transport. Le système est remarquable en ce qu'il comprend:
- un serveur de profils pour permettre à un voyageur d'activer au moins un profil contenant un ensemble de règles comprenant chacune une partie prémisses validée par au moins un événement concernant ledit moyen de transport et une partie conclusion déclenchant au moins une action consistant à émettre un message de notification à au moins une personne dite concernée,
- une base de données de profils pour contenir tout profil activé au moyen du serveur de profils,
- un module de suivi d'événements pour détecter les événements concernant ledit moyen de transport,
- un serveur de notifications pour exécuter toute règle de profil actif de la base de données de profils lorsque la partie prémisses d'une telle règle contient un événement détecté par le module de suivi d'événements,
- au moins une passerelle de communication pour transmettre à la personne concernée le message de notification de la partie conclusion de la règle exécutée par le serveur de notification.

Avantageusement, le serveur de profils comprend un module d'identification authentification agencé pour permettre au voyageur de personnaliser au moins un profil de la base de données de profils.

Particulièrement, le module de suivi d'événements est agencé pour être mis en relation d'une part avec une base de données de transport et d'autre part avec le serveur de profils.

Un deuxième objet de l'invention est un procédé de notification d'événements concernant un moyen de transport. Le procédé est remarquable en ce qu'il comprend:
- une première étape pour détecter dans une base de données de profils, des profils actifs, chaque profil actif étant associé à une demande de suivi de moyen de transport et contenant au moins une règle comprenant une partie prémisses validée par au moins un événement concernant ledit moyen de transport et une partie conclusion déclenchant au moins une action consistant à émettre un message de notification à au moins une personne dite concernée,
- une deuxième étape pour détecter dans une base de données de transport des événements,
- une troisième étape pour exécuter chaque règle de profil actif contenant dans sa partie prémisses, un événement détecté en deuxième étape de façon à envoyer un message de notification tel que décrit dans la partie conclusion de ladite règle.

Avantageusement, le procédé de notification d'événements comprend:
- une quatrième étape pour détecter si un suivi de moyen de transport est actif,
- une cinquième étape pour activer un suivi de moyen de transport non activé pour lequel il existe un profil actif.

Avantageusement aussi, le procédé de notification d'événements comprend:
- une quatrième étape différente pour détecter les profils actifs contenant au moins une règle avec une partie prémisses contenant ledit événement,
- une cinquième étape différente pour déterminer toutes les règles du profil actif avec une partie prémisses contenant ledit événement.

Avantageusement encore, le procédé de notification d'événements comprend:
- une quatrième étape encore différente pour détecter si l'événement courant est de type arrivée,
- une cinquième étape encore différente pour désactiver le suivi si ledit événement est de type arrivée,
- une sixième étape pour envoyer un rapport de suivi à chaque voyageur en ayant fait la demande.

L'invention sera mieux comprise à la lumière de la description d'un mode particulier de réalisation qui suit en référence aux dessins annexés dans lesquels :
- la figure 1 présente un système d'informations conforme à l'invention,
- la figure 2 présente un procédé conforme à l'invention,
- la figure 3 présente divers outils du système conforme à l'invention.

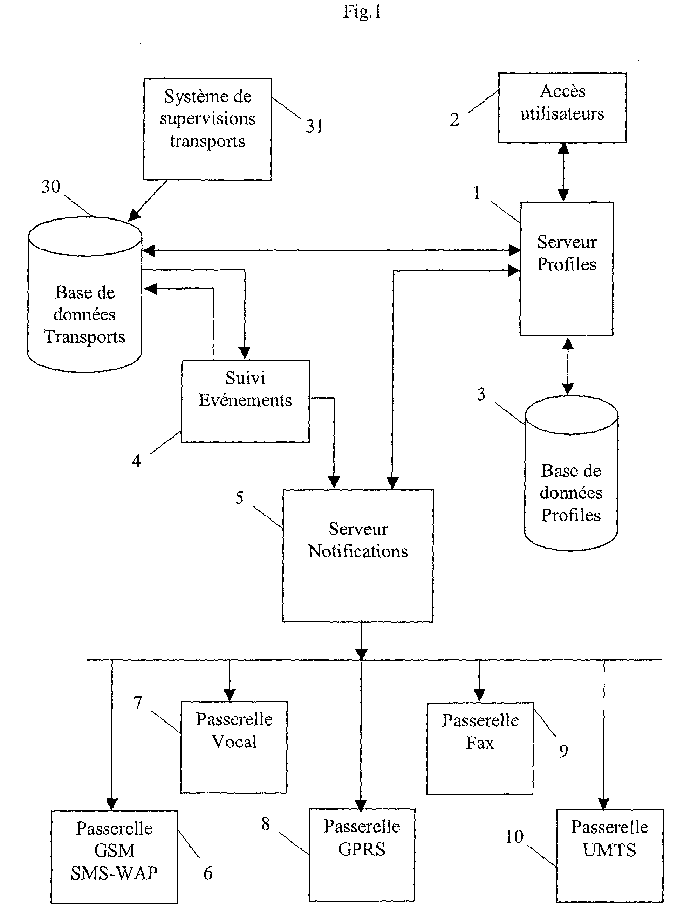

En référence à la figure 1, un serveur de profil 1 est en relation avec des moyens d'accès utilisateur 2. Parmi les moyens d'accès utilisateur, on peut citer par exemple, un micro-ordinateur relié au serveur de profil 1 par le réseau internet, un téléphone mobile doté de fonctions de navigation pour communiquer avec le serveur de profil 1. Le serveur de profil 1 comprend des programmes pour transmettre aux moyens d'accès utilisateur 2, des bordereaux de création et de modification de profil. Un profil contient une liste de contact, une liste de messages personnalisés ou pré-formatés, des règles à utiliser pour des voyages, éventuellement des conditions d'activation systématique de profil pour des voyages déterminés. La liste de contacts contient les coordonnées de personnes concernées par un voyage. Ces coordonnées sont par exemple un numéro de téléphone, une adresse de messagerie internet, un numéro de fax. On indique qu'une règle comprend une partie prémisses et une partie conclusion. La partie prémisses comprend une condition ou une combinaison logique de conditions qui lorsqu'elles sont vérifiées, valident la partie conclusion si la règle est active. Dans une règle de notification selon l'invention, une condition consiste par exemple en la présence d'un événement concernant un moyen de transport suivi. La partie conclusion comprend une ou plusieurs actions pour notifier à chaque personne concernée la ou les implications d'un événement de la partie prémisses. La partie action consiste en une association ou une liste d'associations « contact-message ». Le déclenchement d'une action envoie donc un message de la liste de messages à un contact associé de la liste de contacts qui détermine une personne concernée. Une condition de la partie prémisses est encore par, exemple, une plage horaire qui permet de valider l'envoi d'un message à l'intérieur de cette plage horaire pour éviter une émission de messages à une heure indue par exemple en cas de voyage de nuit ou à cause d'un décalage horaire dans des déplacements à grande distance. La partie prémisses peut aussi comprendre une réitération automatique d'envoi de messages jusqu'à réception d'un acquittement.

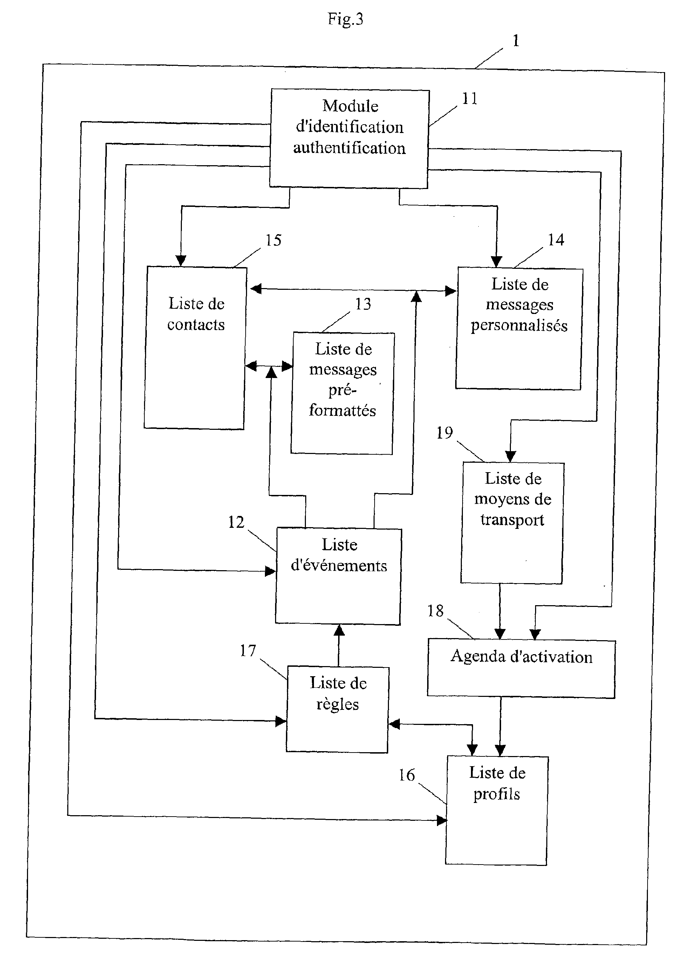

En référence à la figure 3, le serveur de profil 1 comprend un module d'identification authentification 11. Le module d'identification authentification 11 permet au voyageur d'accéder à son espace de voyage. Dans le serveur de profil 1, l'espace de voyage comprend une liste de contacts 15 que le voyageur peut renseigner lorsqu'il s'est correctement authentifié auprès du module d'identification authentification 11. Chaque ligne de la liste de contacts 15 comprend le type de moyen de communication, l'adresse de réception, éventuellement le nom d'une personne à contacter. Le voyageur peut choisir des messages standard dans une liste de messages pré-formatés 13 ou créer des messages qui sont enregistrés dans une liste de messages personnalisés 14. Le serveur de profil 1 propose une liste d'événements 12 tels que retard, avance, départ, arrivée. Avantageusement, certains évènements de la liste d'événements 12 sont paramétrables. Par exemple, le voyageur peut déterminer qu'un retard est significatif lorsqu'il est supérieur à vingt minutes par rapport à l'heure d'arrivée. Une avance par rapport à l'heure d'arrivée peut être précisée comme étant à prendre en compte lorsqu'elle est supérieure à quinze minutes. Le départ du moyen de transport est par exemple le décollage d'un avion, le départ d'un train. L'arrivée du moyen de transport est par exemple l'atterrissage de l'avion ou l'arrivée du train ou queiques minutes avant l'atterrissage de l'avion ou l'arrivée du train.

A partir du module d'identification authentification 11, le voyageur peut aussi paramétrer une liste de règles 17. Comme exemple de règle dans une ligne de la liste 17, on peut trouver :
- "si retard alors envoi fax à l'hôtel réservé et un SMS à la personne qui doit venir accueillir le voyageur" ;
- "si arrivée alors envoi d'un SMS à ma femme" ;
- "si avance appel systématique à toutes les personnes de la liste 15" ;
- "si retard alors envoi message vocal à la compagnie de taxis".

Les règles peuvent préciser un type de message (alerte, confirmation) à délivrer aux personnes de la liste 15. La restitution du message dépend du moyen de communication de la personne à contacter, on peut citer de façon non exhaustive : SMS, e-mail, fax, vocalisation d'un message type, etc. On peut prévoir aussi de compléter le message avec l'heure d'émission, l'heure d'arrivée du moyen de transport (prévu ou effectif) et le nom du voyageur. En fonction du mode de restitution, le voyageur pourra choisir entre les messages pré-formatés de la liste 13 qui seront automatiquement complétés par les informations décrites ci-dessus et des messages qu'il pourra librement saisir dans la liste 14.

De manière à rendre l'étape déclarative des évènements des règles, des messages, des personnes à contacter, moins fastidieuses pour le voyageur, le serveur de profil 1 gère une liste de profils 16 contenant chacun une ou plusieurs règles de la liste 17. Les profils de la liste 16 peuvent être enrichis et adaptés au gré du voyageur lorsqu'il s'est identifié auprès du module d'identification authentification 11.

Une liste de moyens de transport 19, contient des moyens de transport X utilisés par le voyageur. Chaque moyen de transport est identifié par la compagnie qui le gère et identifié par son numéro au sein de cette compagnie. Un agenda d'activation 18 permet d'activer un profil de la liste 16 pour un moyen de transport de la liste 19. Un profil peut être activé régulièrement à date fixée, par exemple tous les lundis matin à 10 heures. Un profil peut aussi être activé ponctuellement pour un moyen de transport occasionnel.

L'accès à l'espace de voyage par le voyageur peut s'effectuer via un site WEB, ce site peut lui-même être accessible en WAP, GPRS, UMTS, etc. Le voyageur peut aussi téléphoner à un numéro type 0 800 ou autre et solliciter l'aide d'un opérateur.

Les profils de la liste de profils 16, avec leur état activé ou non-activé sont stockés dans une base de données de profils 3 à laquelle le serveur de profil 1 accède en lecture et en écriture.

On distingue sur la figure 1, un module de suivi des évènements 4. Ce module 4 interroge ou est notifié par les bases de données 30 des moyens de transport. Typiquement, les bases de données 30 appartiennent et sont maintenues par les différentes compagnies aériennes, les compagnies de chemin de fer, etc à partir de leur système de supervision transport respectif 18. Le module de suivi des évènements 4 est agencé pour formater les données provenant des bases de données transport 30 en un format unique qui convient à un serveur de notification 5.

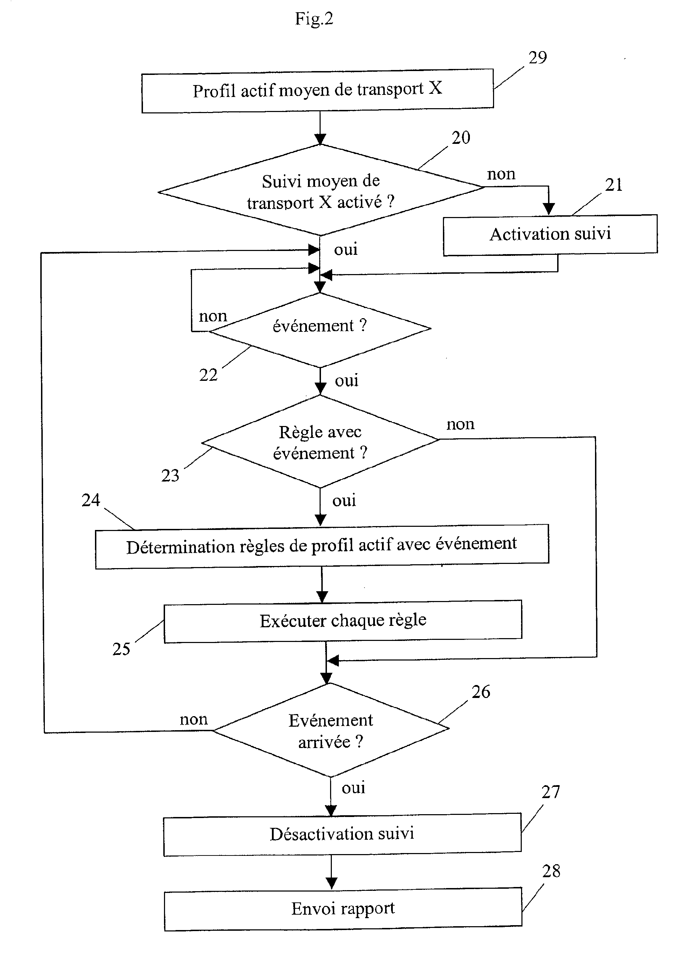

Le serveur de notification 5 est en relation avec le serveur de profil 1 de façon à accéder la base de données de profils 3. Le serveur de notification 5 met en oeuvre le procédé maintenant décrit en référence à la figure 2.

A partir d'une interrogation de la base de données des profils voyageur 3, le serveur de notification 5 détermine dans une étape 29, la liste des moyens de transport à suivre. Les moyens de transport à suivre sont ceux pour lesquels il existe au moins un profil actif contenant une demande de suivi du moyen de transport à la date courante.

Chaque suivi d'un moyen de transport X, détecté non activé dans une étape 20, est activé dans une étape 21.

Sur réception d'un événement provenant du module de suivi des évènements 4, détectés dans une étape 22, une étape 23 consiste à interroger la liste des profils pour lesquels le moyen de transport qui a généré l'événement est suivi. Si parmi ces profils, il existe des règles contenant dans leur partie prémisses, l'événement détecté en étape 22, chaque règle déterminée dans une étape 24 à partir des profils de voyageur actif sur le moyen de transport considéré et contenant cet événement dans sa partie prémisses, est exécuté en étape 25. En étape 25, pour chaque règle identifiée précédemment la partie conclusion est interprétée de façon à envoyer des messages aux différentes personnes concernées. En particulier dans cette étape 25, chaque message est formaté pour être mis à disposition sur une passerelle 6, 7, 8, 9, 10.

Dans une étape 26, si l'événement détecté en étape 22 n'est pas un événement de type arrivée, le procédé se remet en écoute d'un événement suivant en étape 22. Si l'événement concerne l'arrivée du moyen de transport, le suivi est désactivé dans une étape 27 et un rapport de suivi est envoyé au voyageur dans une étape 28.

La passerelle 6 est adaptée pour envoyer des messages de type SMS ou WAP sur un réseau GSM. La passerelle 7 est adaptée pour émettre des messages vocaux par exemple à destination de téléphones. La passerelle 8 est une passerelle de type GPRS. La passerelle 9 est agencée pour envoyer des télécopies. La passerelle 10 est une passerelle de type UMTS.

## Revendications

1. Système de notification d'événements concernant un moyen de transport **caractérisé en ce qu'**il comprend:
- un serveur de profils (1) pour permettre à un voyageur d'activer au moins un profil contenant un ensemble de règles comprenant chacune une partie prémisses validée par au moins un événement concernant ledit moyen de transport et une partie conclusion déclenchant au moins une action consistant à émettre un message de notification à au moins une personne dite concernée,
- une base de données de profils (3) pour contenir tout profil activé au moyen du serveur de profils (1),
- un module de suivi d'événements (4) pour détecter les événements concernant ledit moyen de transport,
- un serveur de notifications (5) pour exécuter toute règle de profil actif de la base de données de profils (3) lorsque la partie prémisses d'une telle règle contient un événement détecté par le module de suivi d'événements (4),
- au moins une passerelle de communication (6,7,8,9,10) pour transmettre à la personne concernée le message de notification de la partie conclusion de la règle exécutée par le serveur de notification (5).

2. Système de notification d'événements selon la revendication 1, **caractérisé en ce que** le serveur de profils (1) comprend un module d'identification authentification (11) agencé pour permettre au voyageur de personnaliser au moins un profil de la base de données de profils (3).

3. Système de notification d'événements selon la revendication 1, **caractérisé en ce que** le module de suivi d'événements (4) est agencé pour être mis en relation d'une part avec une base de données de transport (30) et d'autre part avec le serveur de profils (1).

4. Procédé de notification d'événements concernant un moyen de transport **caractérisé en ce qu'**il comprend:
- une première étape (29) pour détecter dans une base de données de profils (3) des profils actifs, chaque profil actif étant associé à une demande de suivi de moyen de transport et contenant au moins une règle comprenant une partie prémisses validée par au moins un événement concernant ledit moyen de transport et une partie conclusion déclenchant au moins une action consistant à émettre un message de notification à au moins une personne dite concernée,
- une deuxième étape (22) pour détecter dans une base de données de transport (30) des événements,
- une troisième étape (25) pour exécuter chaque règle de profil actif contenant dans sa partie prémisses, un événement détecté en étape (22) de façon à envoyer un message de notification tel que décrit dans la partie conclusion de ladite règle.

5. Procédé de notification d'événements selon la revendication 4, **caractérisé en ce qu'**il comprend:
- une quatrième étape (20) pour détecter si un suivi de moyen de transport est actif,
- une cinquième étape (21) pour activer un suivi de moyen de transport non activé pour lequel il existe un profil actif.

6. Procédé de notification d'événements selon la revendication 4, **caractérisé en ce qu'**il comprend:
- une quatrième étape (23) pour détecter les profils actifs contenant au moins une règle avec une partie prémisses contenant ledit événement,
- une cinquième étape (24) pour déterminer toutes les règles du profil actif avec une partie prémisses contenant ledit événement.

7. Procédé de notification d'événements selon la revendication 4, **caractérisé en ce qu'**il comprend:
- une quatrième étape (26) pour détecter si l'événement courant est de type arrivée,
- une cinquième étape (27) pour désactiver le suivi si ledit événement est de type arrivée,
- une sixième étape (28) pour envoyer un rapport de suivi à chaque voyageur en ayant fait la demande.
